# EUROPEAN PATENT APPLICATION

(11) **EP 0 638 277 A1**
(43) Date of publication of application: **15.02.1995**
(21) Application number: 94202365.6
(22) Date of filing: 11.08.1994
(51) Int. Cl.: A47L 13/18, A41D 19/00

(54) **Cleaning glove/mitten**

(30) Priority: 13.08.1993 GB 9316906; 10.02.1994 GB 9402600
(71) Applicant: Brammer, Ralph John, Luton, Bedfordshire LU3 4 AW (GB)
(72) Inventor: Brammer, Ralph John, Luton, Bedfordshire LU3 4 AW (GB)
(74) Representative: W.P. THOMPSON & CO.

(57) **Abstract**

A cleaning glove/mitten (1), especially for glass, is made from a composite of at least three layers of material. The outer layer, preferably of non-woven material, such as viscose, allows dirt and moisture to penetrate through it. Inside the outer layer is an absorbent layer or layers. This can be a core layer of cellulosic material, or two or more layers of paper. An inner, protective layer, for example of non-woven material, may also be provided.

## Description

This invention relates to gloves/mittens for cleaning purposes, especially for the cleaning of glass, such as windows, etc.

Various gloves/mittens have been devised for cleaning purposes, made from a variety of materials, for example for use in hospitals for the hygienic cleaning of patients. One such example is described in EP-A-0409802.

The cleaning glove/mitten in accordance with the present invention is particularly, but not exclusively, intended for the purpose of cleaning glass surfaces to remove dirt and/or moisture. One particular application of this is to the cleaning of car windows.

In accordance with the present invention there is provided a cleaning glove/mitten, which is made from a composite of at least three layers of material, of which an outer layer is of a material through which dirt and moisture can pass, and of which at least the layer next to the outer layer is of a material which will absorb dirt and moisture passing through the outer layer.

In one embodiment, there is a layer of material on the inside of the glove/mitten to prevent the dirt and moisture penetrating to the hand.

In another embodiment, there are at least two layers of paper on the inside of the outer layer.

Preferably, the outer layer of material is a non-woven material. This non-woven material may be for example 100% viscose or a blend of polypropylene and viscose, possibly incorporating polyester.

The glove/mitten may also be provided with an attached or attachable pad, for example impregnated with a cleaning material which can first be wiped upon the glass before using the glove or mitten to perform the cleaning operation.

In order that the invention may be fully understood, a number of presently preferred embodiments of glove/mitten in accordance with the invention will now be described by way of example and with reference to the accompanying drawing. In the drawing:
Fig. 1 is a representation of a glove/mitten;
Fig. 2 is a sectional view taken along the line II-II in Fig. 1; and,
Fig. 3 is a sectional view through an alternative composite material of which a glove/mitten may be made.

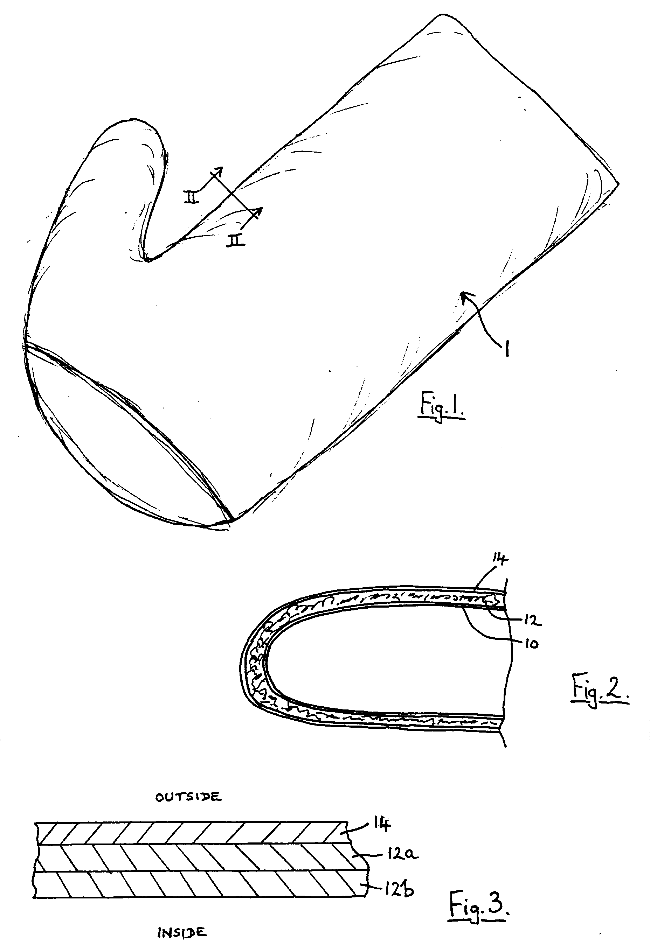

Fig. 1 of the drawings shows a glove or mitten 1 formed simply from a folded composite or alternatively from two layers of the composite stitched, sealed or otherwise secured along the edges.

As shown in Fig. 2 the composite comprises an inner layer 10 which is in contact with the hand and which is preferably of a non-woven material. This inner layer 10 should provide stability to the glove/mitten and prevent loss of the material in the layer outside it. It can also have water-resistant properties in order to provide protection for the hand. Outside the inner layer 10 is a core 12 which is of an absorbent material. It is preferably cellulosic in nature. It may consist for example of between 90% and 100% fluff pulp (wood pulp). A percentage of a binding agent may be necessary or desirable. The outer layer 14 is of a material which will allow dirt and moisture readily to penetrate through it from the outside into the absorbent core 12. It can consist for example of a non-woven material. The preferred material is 100% viscose, preferably having a density of 30 to 40 g/m². This viscose outer layer has the very important property that it will remove smears. Another suitable material is a blend of polypropylene and viscose, possibly with a percentage of added polyester. This non-woven material preferably has a density of 13 to 15 g/m².

The overall thickness of the composite material is preferably between 1.5 and 3 mm. The density of the core 12 of the composite material is preferably between 300 and 500 g/m².

In use, a cleaning solution can be sprayed on a glass surface and the glove/mitten then used to remove dirt and liquid by a wiping action. This wiping action causes the dirt and liquid to pass through the outer layer 14 into the core 12 beneath. The core 12 retains both the dirt and the liquid within its structure.

In the alternative embodiment shown in Fig. 3, there is again an outer layer 14 of a material which will allow dirt and moisture readily to penetrate through it. It is preferably a non-woven material, and preferably 100% viscose, as referred to above. On the inside of the outer layer 14 are two layers 12a, 12b of paper. These are preferably of air-laid paper having a density of the order of 120 g/m². This paper is quite flexible and absorbent of dirt and moisture.

Although this embodiment has two paper layers on the inside of the outer layer, more than two paper layers could alternatively be used. Also, on the inside of the paper layers, a further layer of non-woven material could be provided to protect the hand.

## Claims

1. A cleaning glove/mitten which is made from a composite of at least three layers of material, of which an outer layer is of a material through which dirt and moisture can pass, and of which at least the layer next to the outer layer is of a material which will absorb dirt and moisture passing through the outer layer.

2. A cleaning glove/mitten according to claim 1, which has a layer of material on the inside of the glove/mitten to prevent the dirt and moisture penetrating to the hand.

3. A cleaning glove/mitten according to claim 2, in which at least the layer next to the outer layer is of a cellulosic material.

4. A cleaning glove/mitten according to claim 2 or 3, in which the density of the layer of material next to the outer layer is between 300 and 500 g/m².

5. A cleaning glove/mitten according to claim 1, which comprises at least two layers of paper on the inside of the outer layer.

6. A cleaning glove/mitten according to claim 5, in which the paper layers are of air-laid paper having a density of the order of 120 g/m².

7. A cleaning glove/mitten according to any preceding claim, in which the outer layer is of a non-woven material.

8. A cleaning glove/mitten according to claim 7, in which the outer layer is 100% viscose.

9. A cleaning glove/mitten according to claim 8, in which the outer layer has a density in the range of 30 to 40 g/m².

10. A cleaning glove/mitten according to claim 7, in which the outer layer is a blend of polypropylene and viscose.

11. A cleaning glove/mitten according to claim 10, in which the outer layer has a density in the range of 13 to 15 g/m².

12. A cleaning glove/mitten according to any preceding claim, in which the composite has an overall thickness of between 1.5 mm and 3 mm.

13. A cleaning glove/mitten according to any preceding claim, which has a layer of non-woven material as the inside layer.
